# EUROPEAN PATENT SPECIFICATION

(11) **EP 2 578 663 B1**
(45) Date of publication and mention of the grant of the patent: **25.07.2018**
(21) Application number: 10851952.1
(22) Date of filing: 25.05.2010
(51) Int. Cl.: C09K 11/80, B82Y 30/00, C09K 11/02

(54) **ALUMINATE-BASED FLUORESCENT POWDER COATED BY METAL NANOPARTICLE AND PRODUCTION METHOD THEREOF**
MIT METALLNANOPARTIKELN BESCHICHTETES FLUORESZENZPULVER AUF ALUMINATBASIS UND HERSTELLUNGSVERFAHREN DAFÜR
POUDRE FLUORESCENTE À BASE D'ALUMINATE, ENROBÉE PAR DES NANOPARTICULES MÉTALLIQUES ET SON PROCÉDÉ DE FABRICATION

(43) Date of publication of application: 10.04.2013
(73) Proprietor: Ocean's King Lighting Science&Technology Co., Ltd., Shenzhen, Guangdong 518054 (CN)
(72) Inventor: ZHOU, Mingjie, Shenzhen, Guangdong 518054 (CN); LIU, Jun, Shenzhen, Guangdong 518054 (CN); MA, Wenbo, Shenzhen, Guangdong 518054 (CN)
(74) Representative: Johnson, Richard Alan
(86) International application number: PCT/CN2010/073222
(87) International publication number: WO 2011/147080

(56) References cited:
- EP-A1- 1 279 705
- CN-A- 1 334 309
- CN-C- 1 304 527
- JP-A- H0 326 781
- US-A- 5 277 841
- US-B2- 6 946 785
- US-B2- 6 946 785
- PSUJA P ET AL: "Fabrication and optical properties of selected coreshell structures with nanocrystalline rare-earth doped phosphors coated with SiO2 submicron particles", PHOTONICS AND MICROSYSTEMS, 2007 INTERNATIONAL STUDENTS AND YOUNG SCIENTISTS WORKSHOP ON, IEEE, PISCATAWAY, NJ, USA, 8 July 2007 (2007-07-08), pages 46-49, XP031283368, ISBN: 978-1-4244-1313-3

## Description

### FIELD OF THE INVENTION

The invention relates to fluorescent powder material and production method thereof, more particularly, the invention relates to aluminate-based fluorescent powder excited by cathode ray and production method thereof.

### BACKGROUND OF THE INVENTION

At present, there are two types of commercial FED fluorescent powder: sulfide system and oxide system. The sulfide system including blue powder ZnS: Ag,Cl, SrGa₂S₄: Ce, green powder SrGa₂S₄: Eu and red powder Y₂O₂S: Eu. Although sulfide system has higher luminance, it has poor stability. The oxide system mainly includes blue powder Y₂SiO₅: Ce, green powder ZnGa₂O₄: Mn, Y₂SiO₅: Tb, Y₃Al₅O₁₂: Tb and red powder Y₂O₃: Eu. Oxide system has higher stability, but its luminance and conductivity is not as good as sulfide system. Therefore, in order to improve the conductivity of FED fluorescent powder, several methods are studied as following: using fluorescent material with conductivity or coating fluorescent powder surface with conductive material, such as In₂O₃, SnO₂, ZnO, etc. Or doping conductive ion into fluorescent powder, such as In³⁺, Li⁺, Na⁺, K⁺, etc. Or doping high concentration impurities into fluorescent powder as donor substance, it can reduce the conductivity of the fluorescent powder. Or modifying current commercial fluorescent powder, for example, controlling the morphology, particle size and uniformity of the fluorescent powder by different production methods or a combination of different production methods, or taking advantage of core-shell. For example US 5 277 841 and US 6 946 785 disclose such red and blue emitting powders.

### SUMMARY OF THE INVENTION

The technical problem that the invention solves is to provide an aluminate-based fluorescent powder coated by metal nanoparticle which has high stability, uniform granularity and high luminescence intensity and production method thereof.

The technical solution to solve the technical problem in the present invention is: an aluminate-based fluorescent powder coated by metal nanoparticle is provided, said aluminate-based fluorescent powder coated by metal nanoparticle has the following chemical formula: (Y₁₋ₓTbₓ)₃(Al_{1-y}Ga_{y})₅O₁₂@zM,in which 0<x≤1.0, 0 ≤y≤1.0,@ means coating, metal nanoparticle M is one of Ag, Au, Pt, Pd, Cu, z is mole ratio of metal nanoparticle to aluminate-based fluorescent powder and 0<z≤ 1×10⁻². Herein, preferably, 0.20≤x≤0.60, 0.25≤y≤0.75, 1×10⁻⁴≤z≤5×10⁻³.

In the fluorescent powder of present invention, said metal nanoparticle M is one of Ag, Au, Pt, Pd, Cu. Preferably, 0.20≤x≤0.60, 0.25≤y≤0.75, 1×10⁻⁴≤z ≤5×10⁻³.

And, production method of aluminate-based fluorescent powder coated by metal nanoparticle, comprising:
(a) producing metal nanoparticle colloid;
(b) surface treating the metal nanoparticle by adding metal nanoparticle colloid to the solution in which polyvinylpyrrolidone is dissolved;
(c) taking Al(NO₃)₃,Tb(NO₃)₃,Ga(NO₃)₃ and Y(NO₃)₃ solution in erlenmeyer flask stirring, heating in water-bath, adding to the final solution treated in step (b) directly and stirring uniformly to form mixed solution;
(d) forming mixed liquid by dissolving citric acid monohydrate in ethanol ,adding said mixed liquid to the final mixed solution obtained in step (c), adjusting pH value to 3 to 5 by ammonia, sealing, keeping the temperature constant, drying and obtaining precursor;
(e) pre-calcinating the precursor obtained in step (d), then cooling to the room temperature, calcinating in reduction atmosphere after grinding, cooling, taking out and grinding to obtain said aluminate-based fluorescent powder coated by metal nanoparticle.

In the method of present invention, the preparation step of metal nanoparticle colloid in said step (a), comprising: dissolving metal compound in ethanol or water and diluting, then under stirring, mixing with one or more assistant agents and reducing agent successively, to obtain metal nanoparticle colloid. Said assistant agent is at least one of polyvinylpyrrolidone, sodium citrate, cetyl trimethyl ammonium bromide, sodium dodecyl sulfate, sodium dodecyl sulfonate, said reducing agent is at least one of hydrazine hydrate, ascorbic acid, sodium citrate, sodium borohydride.

In the method of present invention, in said step (c), the temperature of water-bath is 80 °C.

In the method of present invention, in said step (d), the molar ratio of said citric acid monohydrate to total metal ion is 3:1, said temperature is kept constant for 3 to 6h by stirring in an 80°C water-bath. In said step (d), said drying condition is drying in blast drying oven at 60 °C for 12 hours, then drying at 100 °C.

In the method of present invention, in said step (f), the temperature of said pre-calcination is in the range of 600 to 1250°C, the time of pre-calcination is in the range of 2 to 6 hours, the temperature of said calcination is in the range of 900 to 1400 °C, the time of calcination is in the range of 2 to 5 hours. Said reducing atmosphere is any gas selected from mixed gas of nitrogen and hydrogen, pure hydrogen, and carbon monoxide.

Compared to the prior art, the core-shell structure fluorescent powder (Y₁₋ₓTbₓ)₃(Al_{1-y}Ga_{y})₅O₁₂@zM prepared in present invention doesn't need ball milling, it has high stability, uniform particle size and high luminous efficiency, it can be used in the field of FED as a green fluorescent powder. The present invention enhances the luminescence intensity of fluorescent powder by coating metal nanoparticle, and the luminescence intensity of fluorescent powder is higher than commercial fluorescent powder YAGG:Tb. The production method of present invention is simple, easy to prepare, no pollution, easy to control, suitable for industrial production; moreover, the production method of present invention does not introduce other impurities, obtain high quality products, can be widely applied in the preparation of the fluorescent powder.

### BRIEF DESCRIPTION OF THE DRAWINGS

Further description of the present invention will be illustrated, which combined with embodiments in the drawings:

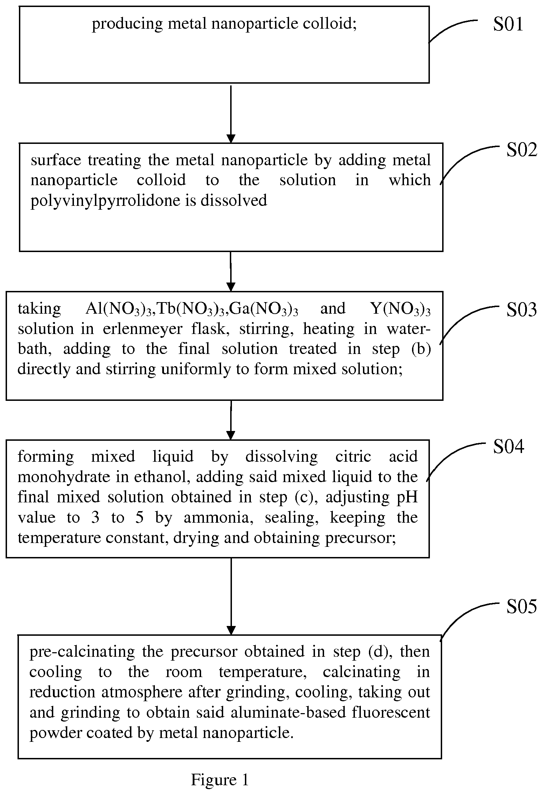

Figure 1 is the preparation flowchart of aluminate-based fluorescent powder coated by metal nanoparticle in the present invention.

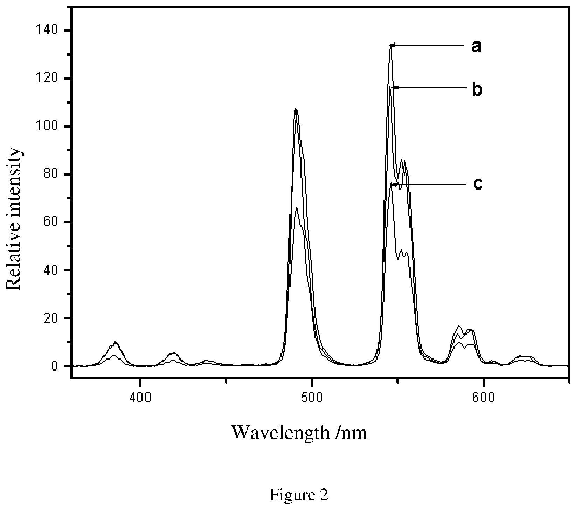

Figure 2 is an emission spectrum of fluorescent powder excited by cathode ray under 1.0KV acceleration voltage in the example 2 of the present invention. Herein, curve a is the emission spectrum of the fluorescent powder (Y_{0.95}Tb_{0.05})₃Al₅O₁₂ with Ag metal nanoparticle; curve b is the emission spectrum of the commercial fluorescent powder YAGG:Tb; curve c is the emission spectrum of the fluorescent powder (Y_{0.95}Tb_{0.05})₃Al₅O₁₂ without Ag metal nanoparticle.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides an aluminate-based fluorescent powder coated by metal nanoparticle, said aluminate-based fluorescent powder coated by metal nanoparticle has the following chemical formula: (Y₁₋ₓTbₓ)₃(Al_{1-y}Ga_{y})₅O₁₂@zM, in which 0<x≤1.0, 0≤y≤1.0,@ means coating, metal nanoparticle M is one of Ag, Au, Pt, Pd, Cu, Z is mole ratio of metal nanoparticle to aluminate-based fluorescent powder and 0<z≤1×10⁻².

In the fluorescent powder of present invention, said metal nanoparticle M is one of Ag, Au, Pt, Pd, Cu. Preferably, 0.20≤x≤0.60, 0.25≤y≤0.75, 1×10⁻⁴≤z ≤5×10⁻³.

See Figure 1; figure 1 shows the flow of the production method of the present invention, the production method comprises the following steps:
Step S01: producing metal nanoparticle colloid;
Step S02: surface treating the metal nanoparticle by adding metal nanoparticle colloid to the solution in which polyvinylpyrrolidone is dissolved;
Step S03:taking Al(NO₃)₃,Tb(NO₃)₃,Ga(NO₃)₃ and Y(NO₃)₃ solution in erlenmeyer flask stirring, heating in water-bath, adding to the final solution treated in step S02 directly and stirring uniformly to form mixed solution;
Step S04:forming mixed liquid by dissolving citric acid monohydrate in ethanol ,adding said mixed liquid to the final mixed solution obtained in step S03, adjusting pH value to 3 to 5 by ammonia, sealing, keeping the temperature constant, drying and obtaining precursor;
Step S05: pre-calcinating the precursor obtained in step S04, then cooling to the room temperature, calcinating in reduction atmosphere after grinding, cooling, taking out and grinding to obtain said aluminate-based fluorescent powder coated by metal nanoparticle.

In the method of present invention, the preparation step of metal nanoparticle colloid in said step S01, comprising: dissolving metal compound in ethanol or water and diluting, then under stirring, mixing with one or more assistant agents and reducing agent successively, to obtain metal nanoparticle colloid. Said assistant agent is at least one of polyvinylpyrrolidone, sodium citrate, cetyl trimethyl ammonium bromide, sodium dodecyl sulfate, sodium dodecyl sulfonate, said reducing agent is at least one of hydrazine hydrate, ascorbic acid, sodium citrate, sodium borohydride.

In the method of present invention, in said step S03, the temperature of water-bath is 80 °C.

In the method of present invention, in said step S04, the molar ratio of said citric acid monohydrate to total metal ion is 3:1, said temperature is kept constant for 3 to 6h by stirring in an 80°C water-bath. Said drying condition is drying in blast drying oven at 60 °C for 12 hours, then drying at 100°C.

In the method of present invention, in said step S05, the temperature of said pre-calcination is in the range of 600 to 1250°C, the time of pre-calcination is in the range of 2 to 6 hours, the temperature of said calcination is in the range of 900 to 1400 °C, the time of calcination is in the range of 2 to 5 hours. Said reducing atmosphere is any gas selected from mixed gas of nitrogen and hydrogen, pure hydrogen, and carbon monoxide.

The core-shell structure fluorescent powder (Y₁₋ₓTbₓ)₃(Al_{1-y}Ga_{y})₅O₁₂@zM prepared in present invention doesn't need ball milling, it has high stability, uniform particle size and high luminous efficiency, it can be used in the field of FED as a green fluorescent powder. The present invention enhances the luminescence intensity of fluorescent powder by coating metal nanoparticle, and the luminescence intensity of fluorescent powder is higher than commercial fluorescent powder YAGG:Tb. The production method of present invention is simple, easy to prepare, no pollution, easy to control, suitable for industrial production; moreover, the production method of present invention does not introduce other impurities, obtain high quality products, can be widely applied in the preparation of the fluorescent powder.

Special examples are disclosed as follows to demonstrate production method and other features of aluminate-based fluorescent powder coated by metal nanoparticle.

### Example 1:the making of fluorescent powder having chemical formula of (Y_{0.5}Tb_{0.5})₃(Al_{0.5}Ga_{0.5})₅O₁₂@Au by using sol-gel coating method:

Weighting and dissolving 16.4mg of chloroauric acid in 7.5 mL of ethanol, dissolved completely, stirring and adding 56mg of sodium citrate and 24mg of cetyl trimethyl ammonium bromide; weighting and dissolving 7.6mg of sodium borohydride in 10mL of ethanol, obtaining 10mL of 0.02mol/L alcoholic solution of sodium borohydride; under the condition of magnetic stirring, adding 2.5mL of alcoholic solution of sodium borohydride into the alcoholic solution of chloroauric acid, continue to react for 30min, then obtaining Au nanoparticle collosol containing 4×10⁻³mol/L of Au; weighting and dissolving 0.2g of PVP in 5mL of deionized water; then adding 10ml of 4×10⁻³mol/L Au nanoparticle collosol, stirring for 24h and to reserve.

Placing 10mL of 1.0 mol/L Al(NO₃)₃ solution, 6.0ml of 1mol/L Y(NO₃)₃ solution, 10ml of 1mol/L Ga(NO₃)₃ solution and 6.0ml of 1 mol/L Tb(NO₃)₃ solution into a conical flask, under the condition of magnetic stirring, heating in water-bath which is maintained at 80°C, then adding said metal nanoparticle collosol, stirring uniformly; weighting 6.7245g of citric acid monohydrate (the amount is as much as the molar mass of metal ion) and dissolving in 30 ml of ethanol to make up solution, dripping the solution into the metal mixed solution, then adding ammonia water to adjust pH to about 3, sealing, placing into 80°C water-bath, stirring, and keep the temperature constant for 3h, drying in blast drying oven at 60°C overnight, then drying completely at 100°C to obtain precursor; placing the precursor into high temperature furnace and pre-calcinating at 600°C for 6h, cooling to the room temperature, grinding, then placing into tube furnace, calcinating in reducing atmosphere which is mixed gas of nitrogen and hydrogen (the volume ratio of N₂ to H₂ is 95:5) at 1200°C for 3h, naturally cooling, taking the precursor out and grinding, the desired fluorescent powder (Y_{0.5}Tb_{0.5})₃(Al₀.₅Ga_{0.5})₅O₁₂@Au is obtained.

### Example 2: the making of fluorescent powder having chemical formula of (Y_{0.95}Tb_{0.05})₃Al₅O₁₂@Ag by using sol-gel coating method:

Weighting and dissolving 3.4mg of silver nitrate and 35.28mg of sodium citrate in 18.4 mL of deionized water, stirring for 1.5min, weighting and dissolving 3.8mg of sodium borohydride in 10mL of ethanol obtaining 0.01mol/L alcoholic solution of sodium borohydride, dripping 1.6ml of the alcoholic solution of sodium borohydride slowly into the solution of silver nitrate and sodium citrate; continue to react for 2min, then obtaining 1×10⁻³mol/L Ag nanoparticle collosol; weighting and dissolving 0.1g of PVP into 7ml of deionized water, the adding 0.5ml of 1×10⁻³mol/L Ag nanoparticle collosol, stirring for 12h and to reserve.

Placing 12.5mL of 2.0 mol/L Al(NO₃)₃ solution, 7.13ml of 2mol/L Y(NO₃)₃ solution and 3.75ml of 0.2mol/L Tb(NO₃)₃ solution into a conical flask, under the condition of magnetic stirring, heating in water-bath which is maintained at 80°C, then adding said metal nanoparticle collosol, stirring uniformly; weighting 16.8096g of citric acid monohydrate (the amount is 2 times as much as the molar mass of metal ion) and dissolving in 30 ml of ethanol to make up solution, dripping the solution into the metal mixed solution, then adding ammonia water to adjust pH to about 4, sealing, placing into 80°C water-bath, stirring, and keep the temperature constant for 6h, drying in blast drying oven at 60°C overnight, then drying completely at 100°C to obtain precursor; placing the precursor into high temperature furnace and pre-calcinating at 800°C for 5h, cooling to the room temperature, grinding, then placing into tube furnace, calcinating in reducing atmosphere CO at 1300°C for 4h, naturally cooling, taking the precursor out and grinding, the desired fluorescent powder (Y_{0.95}Tb_{0.05})₃Al₅O₁₂@Ag is obtained. The fluorescent powder (Y_{0.95}Tb_{0.05})₃Al₅O₁₂ without metal nanoparticle-coating is prepared using the same method.

As shown in Figure 2, Figure 2 is an emission spectrum of fluorescent powder (Y_{0.95}Tb_{0.05})₃Al₅O₁₂@Ag (curve a) excited by cathode ray under 1.0KV acceleration voltage in the present example with respect to commercial fluorescent powder YAGG:Tb (curve b) and fluorescent powder (Y_{0.95}Tb_{0.05})₃Al₅O₁₂ (curve c). It can be seen from the emission peak at 546nm, compared to the no metal nanoparticle coating fluorescent powder, the luminescence intensity of metal nanoparticle-coating fluorescent powder is increased by 76%, compared to the commercial fluorescent powder, the luminescence intensity of metal nanoparticle-coating fluorescent powder is increased by 16%.

### Example 3: The making of fluorescent powder having chemical formula of Tb₃(Al_{0.25}Ga_{0.75})₅O₁₂@Pt by using sol-gel coating method:

Weighting and dissolving 5.2mg of chloroplatinic acid in 17 mL of ethanol, dissolved completely, stirring and adding 8mg of sodium citrate and 1.2mg of sodium dodecyl sulfonate; weighting and dissolving 0.4mg of sodium borohydride in 10mL of ethanol, obtaining 1×10⁻³mol/L alcoholic solution of sodium borohydride, dripping 0.4mL of the alcoholic solution of sodium borohydride slowly into the mix solution of chloroplatinic acid, sodium citrate and sodium dodecyl sulfonate, reacting for 5min, then adding 2.6mL of 1×10⁻²mol/L aqueous solution of hydrazine hydrate, continue to react for 40min, then obtaining Pt nanoparticle collosol containing 5×10⁻⁴mol/L of Pt; weighting and dissolving 0.15g of PVP in 6mL of deionized water; then adding 5ml of 5×10⁻⁴mol/L Pt nanoparticle collosol, stirring for 18h and to reserve.

Placing 5mL of 1.0 mol/L Al(NO₃)₃ solution, 15ml of 1mol/L Ga(NO₃)₃ solution and 12ml of 1 mol/L Tb(NO₃)₃ solution into a conical flask, under the condition of magnetic stirring, heating in water-bath which is maintained at 80°C, then adding said metal nanoparticle collosol, stirring uniformly; weighting 13.4490g of citric acid monohydrate (the amount is 2 times as much as the molar mass of metal ion) and dissolving in 30 ml of ethanol to make up solution, dripping the solution into the metal mixed solution, then adding ammonia water to adjust pH to about 5, sealing, placing into 80°C water-bath, stirring, and keep the temperature constant for 3h, drying in blast drying oven at 60°C overnight, then drying completely at 100°C to obtain precursor; placing the precursor into high temperature furnace and pre-calcinating at 1000°C for 3h, cooling to the room temperature, grinding, then placing into tube furnace, calcinating in reducing atmosphere which is mixed gas of nitrogen and hydrogen (the volume ratio of N₂ to H₂ is 90:10) at 1200°C for 5h, naturally cooling, taking the precursor out and grinding, the desired fluorescent powder Tb₃(Al_{0.25}Ga_{0.75})₅O₁₂@Pt is obtained.

### Example4: the making of fluorescent powder having chemical formula of (Y_{0.4}Tb_{0.6})₃(Al_{0.75}Ga_{0.25})₅O₁₂@Pd by using sol-gel coating method:

Weighting and dissolving 0.43g of palladium chloride in 15 mL of deionized water, dissolved completely, stirring and adding 1.1g of sodium citrate and 0.4g of sodium dodecyl sulfate; weighting and dissolving 0.038g of sodium borohydride in 10mL of ethanol, obtaining 0.1mol/L alcoholic solution of sodium borohydride, dripping 5mL of the alcoholic solution of sodium borohydride slowly into the mix solution of palladium chloride, sodium citrate and sodium dodecyl sulfate, reacting for 20min, then obtaining Pd nanoparticle collosol containing 5×10⁻³mol/L of Pd; weighting and dissolving 0.3g of PVP in 5mL of deionized water; then adding in 4ml of 5×10⁻³mol/L Pd nanoparticle collosol, stirring for 16h and to reserve.

Placing 15mL of 1.0 mol/L Al(NO₃)₃ solution, 5ml of 1mol/L Ga(NO₃)₃ solution, 4.8ml of 1 mol/L Y(NO₃)₃ and 7.2ml of 1 mol/L Tb(NO₃)₃ solution into a conical flask, under the condition of magnetic stirring, heating in water-bath which is maintained at 80°C, then adding said metal nanoparticle collosol, stirring uniformly; weighting 20.1734g of citric acid monohydrate (the amount is 3 times as much as the molar mass of metal ion) and dissolving in 30 ml of ethanol to make up solution, dripping the solution into the metal mixed solution, then adding ammonia water to adjust pH to about 5, sealing, placing into 80°C water-bath, stirring, and keep the temperature constant for 5h, drying in blast drying oven at 60°C overnight, then drying completely at 100°C to obtain precursor; placing the precursor into high temperature furnace and pre-calcinating at 1250°C for 2h, cooling to the room temperature, grinding, then placing into tube furnace, calcinating in reducing atmosphere which is mixed gas of nitrogen and hydrogen (the volume ratio of N₂ to H₂ is 90:10) at 900°C for 5h, naturally cooling, taking the precursor out and grinding, the desired fluorescent powder (Y_{0.4}Tb_{0.6})₃(Al_{0.75}Ga_{0.25})₅O₁₂@Pd is obtained.

### Example5: the making of fluorescent powder having chemical formula of (Y_{0.8}Tb_{0.2})₃Ga₅O₁₂@Cu by using sol-gel coating method:

Weighting and dissolving 2.3mg of copper nitrate in 16 mL of ethanol, dissolved completely, stirring and adding 12mg of PVP; weighting and dissolving 0.4mg of sodium borohydride in 10mL of ethanol, obtaining 1×10⁻³mol/L alcoholic solution of sodium borohydride, dripping 4mL of the alcoholic solution of sodium borohydride slowly into the mix solution of copper nitrate and PVP , reacting for 2min, then obtaining Cu nanoparticle collosol containing 4×10⁻⁴mol/L of Cu; weighting and dissolving 0.05g of PVP in 5mL of deionized water; then adding in 0.5ml of 4×10⁻⁴mol/L Cu nanoparticle collosol, stirring for 24h and to reserve.

Placing 9.6mL of 1.0 mol/L Y(NO₃)₃ solution, 2.4ml of 1mol/L Tb(NO₃)₃ solution and 20ml of 1mol/L Ga(NO₃)₃ solution into a conical flask, under the condition of magnetic stirring, heating in water-bath which is maintained at 80°C, then adding said metal nanoparticle collosol, stirring uniformly; weighting 13.4490g of citric acid monohydrate (the amount is 2 times as much as the molar mass of metal ion) and dissolving in 30 ml of ethanol to make up solution, dripping the solution into the metal mixed solution, then adding ammonia water to adjust pH to about 4, sealing, placing into 80°C water-bath, stirring, and keep the temperature constant for 6h, drying in blast drying oven at 60°C overnight, then drying completely at 100°C to obtain precursor; placing the precursor into high temperature furnace and pre-calcinating at 900°C for 6h, cooling to the room temperature, grinding, then placing into tube furnace, calcinating in reducing atmosphere CO at 1400°C for 2h, naturally cooling, taking the precursor out and grinding, the desired fluorescent powder (Y_{0.8}Tb_{0.2})₃Ga₅O₁₂@Cu is obtained.

### Example6: the making of fluorescent powder having chemical formula of (Y_{0.8}Tb_{0.2})₃(Al_{0.8}Ga_{0.2})₅O₁₂@Ag by using sol-gel coating method:

Weighting 0.0429g of AgNO₃, 0.0733g of sodium citrate, 0.05g of PVP, and making up 10ml of 0.025 mol/L aqueous solution of AgNO₃, 10mL of 0.025 mol/L aqueous solution of sodium citrate, 10mL of 5mg/mL aqueous solution of PVP, respectively; adding 2mL of aqueous solution of AgNO₃ and 4ml of PVP into 30ml of deionized water, stirring, heating to 100°C, then dripping 4ml of aqueous solution of sodium citrate slowly into the solution of AgNO₃, reacting for 15min, then obtaining Ag nanoparticle collosol containing 1×10⁻³mol/L of Ag; weighting and dissolving 0.05g of PVP in 4mL of deionized water; then adding 5ml of 1×10⁻³mol/L Ag nanoparticle collosol, stirring for 24h and to reserve. Placing 9.6mL of 1.0 mol/L Y(NO₃)₃ solution, 2.4ml of 1mol/L Tb(NO₃)₃ solution and 16ml of 1mol/L Al(NO₃)₃ and 4ml of 1mol/L Ga(NO₃)₃ solution into a conical flask, under the condition of magnetic stirring, heating in water-bath which is maintained at 80°C, then adding said metal nanoparticle collosol, stirring uniformly; weighting 10.0868g of citric acid monohydrate (the amount is 1.5 times as much as the molar mass of metal ion) and dissolving in 30 ml of ethanol to make up solution, dripping the solution into the metal mixed solution, then adding ammonia water to adjust pH to about 4, sealing, placing into 80°C water-bath, stirring, and keep the temperature constant for 6h, drying in blast drying oven at 60°C overnight, then drying completely at 100°C to obtain precursor; placing the precursor into high temperature furnace and pre-calcinating at 900°C for 6h, cooling to the room temperature, grinding, then placing into tube furnace, calcinating in reducing atmosphere H₂ at 1300°C for 3h, naturally cooling,taking the precursor out and grinding, the desired fluorescent powder (Y_{0.8}Tb_{0.2})₃(Al_{0.8}Ga_{0.2})₅O₁₂@Ag is obtained.

## Claims

1. An aluminate-based fluorescent powder coated by metal nanoparticle, wherein said aluminate-based fluorescent powder coated by metal nanoparticle has the chemical formula of (Y₁₋ₓTbₓ)₃(Al_{1-y}Ga_{y})₅O₁₂@zM, in which 0<x≤1.0, 0≤y≤ 1.0,@ means coating, M is metal nanoparticle, z is mole ratio of metal nanoparticle to aluminate-based fluorescent powder and 0<z≤0.01.

2. The aluminate-based fluorescent powder coated by metal nanoparticle as in claim 1, wherein said metal nanoparticle M is one of Ag, Au, Pt, Pd, Cu.

3. The aluminate-based fluorescent powder coated by metal nanoparticle as in claim 1 or 2, wherein 0.20≤x≤0.60, 0.25≤y≤0.75, 1×10⁻⁴≤z≤5×10⁻³.

4. Production method of aluminate-based fluorescent powder coated by metal nanoparticle, comprising:
(a) producing metal nanoparticle colloid;
(b) surface treating the metal nanoparticle by adding metal nanoparticle colloid to the solution in which polyvinylpyrrolidone is dissolved;
(c) taking Al(NO₃)₃,Tb(NO₃)₃,Ga(NO₃)₃ and Y(NO₃)₃ solution in erlenmeyer flask, stirring, heating in water-bath, adding to the final solution treated in step (b) directly and stirring uniformly to form mixed solution;
(d) forming mixed liquid by dissolving citric acid monohydrate in ethanol, adding said mixed liquid to the final mixed solution obtained in step (c), adjusting pH value to 3 to 5 by ammonia, sealing, keeping the temperature constant, drying and obtaining precursor;
(e) pre-calcinating the precursor obtained in step (d), then cooling to the room temperature, calcinating in reduction atmosphere after grinding, cooling, taking out and grinding to obtain said aluminate-based fluorescent powder coated by metal nanoparticle.

5. The production method as in claim 4, wherein, the production method of metal nanoparticle colloid in said step (a), comprising: dissolving metal compound in ethanol or water and diluting, then under stirring, mixing with one or more assistant agents and reducing agent successively, to obtain metal nanoparticle colloid.

6. The production method as in claim 5, wherein, said assistant agent is at least one of polyvinylpyrrolidone, sodium citrate, cetyl trimethyl ammonium bromide, sodium dodecyl sulfate, sodium dodecyl sulfonate, said reducing agent is at least one of hydrazine hydrate, ascorbic acid, sodium citrate, sodium borohydride.

7. The production method as in claim 4, wherein, in said step (c), the temperature of water-bath is 80 °C; in said step (e), said reducing atmosphere is any gas selected from mixed gas of nitrogen and hydrogen, pure hydrogen, and carbon monoxide.

8. The production method as in claim 4, wherein, in said step (d), the molar ratio of said citric acid monohydrate to total metal ion is 3:1, said temperature is kept constant for 3 to 6h by stirring in an 80°C water-bath.

9. The production method as in claim 4, wherein, in said step (d), said drying condition is drying in blast drying oven at 60 °C for 12 hours, then drying at 100 °C.

10. The production method as in claim 4, wherein, in said step (f), the temperature of said pre-calcination is in the range of 600 to 1250°C, the time of pre-calcination is in the range of 2 to 6 hours, the temperature of said calcination is in the range of 900 to 1400°C, the time of calcination is in the range of 2 to 5 hours.

## Patentansprüche

1. Mit Metallnanopartikeln beschichtetes aluminatbasiertes Fluoreszenzpulver, wobei das mit Metallnanopartikeln beschichtete aluminatbasierte Fluoreszenzpulver die chemische Formel (Y₁₋ₓTbₓ)₃(Al_{1-y}Ga_{y})₅O₁₂@zM aufweist, in der 0<x≤1,0; 0≤y≤1,0; @ die Beschichtung, M die Metallnanopartikel, z das Molverhältnis von Metallnanopartikeln zu aluminatbasiertem Fluoreszenzpulver und 0≤z≤0,01 ist.

2. Mit Metallnanopartikeln beschichtetes aluminatbasiertes Fluoreszenzpulver nach Anspruch 1, wobei das Nanopartikel M aus Ag, Au, Pt, Pd, Cu ausgewählt sind.

3. Mit Metallnanopartikeln beschichtetes aluminatbasiertes Fluoreszenzpulver nach Anspruch 1 oder 2, wobei 0,20≤x≤0,60; 0,25≤y≤0,75; 1×10⁻⁴≤z≤5×10⁻³ ist.

4. Herstellungsverfahren von mit Metallnanopartikeln beschichtetem aluminatbasiertem Fluoreszenzpulver, das Folgendes umfasst:
(a) das Herstellen von Metallnanopartikel-Kolloid;
(b) das Oberflächenbehandeln der Metallnanopartikel durch das Zusetzen von Metallnanopartikel-Kolloid zu der Lösung, in der Polyvinylpyrrolidon gelöst ist;
(c) das Zugeben der Lösungen von Al(NO₃)₃, Tb(NO₃)₃, Ga(NO₃)₃ und Y(NO₃)₃ in einen Erlenmeyerkolben, Rühren, Erhitzen im Wasserbad, das direkte Zusetzen zu der in Schritt (b) behandelten letztendlichen Lösung und das gleichförmige Rühren, um die gemischte Lösung herzustellen;
(d) das Herstellen einer gemischten Flüssigkeit durch das Lösen von Citronensäure-Monohydrat in Ethanol, das Zusetzen der gemischten Flüssigkeit zu der in Schritt (c) erhaltenen letztendlichen gemischten Lösung, das Einstellen des pH-Werts auf 3 bis 5 durch Ammoniak, das Verschließen, Konstanthalten der Temperatur, das Trocknen und Erhalten des Vorläufers;
(e) das Vorkalzinieren des in Schritt (d) erhaltenen Vorläufers, dann das Abkühlen auf Raumtemperatur, das Kalzinieren in Reduktionsatmosphäre nach dem Mahlen, Abkühlen, Herausnehmen und Mahlen, um das mit Metallnanopartikeln beschichtete aluminatbasierte Fluoreszenzpulver zu erhalten.

5. Herstellungsverfahren nach Anspruch 4, wobei das Herstellungsverfahren von Metallnanopartikel-Kolloid in Schritt (a) Folgendes umfasst: das Lösen einer Metallverbindung in Ethanol oder Wasser und Verdünnen, dann unter Rühren das sukzessive Mischen mit einem oder mehreren Hilfsstoffen und Reduktionsmittel, um Metallnanopartikel-Kolloid zu erhalten.

6. Herstellungsverfahren nach Anspruch 5, wobei der Hilfsstoff zumindest einer von Polyvinylpyrrolidon, Natriumcitrat, Cetyltrimethylammoniumbromid, Natriumdodecylsulfat, Natriumdodecylsulfonat und das Reduktionsmittel zumindest eines von Hydrazinhydrat, Ascorbinsäure, Natriumcitrat, Natriumborhydrid ist.

7. Herstellungsverfahren nach Anspruch 4, wobei in Schritt (c) die Temperatur des Wasserbads 80 °C beträgt; in Schritt (e) die Reduktionsatmosphäre ein beliebiges Gas ausgewählt aus einem Gasgemisch von Stickstoff und Wasserstoff, reinem Wasserstoff und Kohlenstoffmonoxid ist.

8. Herstellungsverfahren nach Anspruch 4, wobei in Schritt (d) das Molverhältnis des Citronensäure-Monohydrats zu Gesamtmetallionen 3:1 beträgt und die Temperatur 3 bis 6 Stunden lang durch Rühren in einem 80° C heißen Wasserbad konstant gehalten wird.

9. Herstellungsverfahren nach Anspruch 4, wobei in Schritt (d) die Trocknungsbedingung das Trocknen im Blasluftrocknungsofen 12 Stunden lang bei 60 °C dann das Trocknen bei 100 °C darstellt.

10. Herstellungsverfahren nach Anspruch 4, wobei in Schritt (f) die Temperatur der Vorkalzinierung im Bereich von 600 bis 1250 °C, die Dauer der Vorkalzinierung im Bereich von 2 bis 6 Stunden, die Temperatur der Kalzinierung im Bereich von 900 bis 1400 °C und die Kalzinierungsdauer im Bereich von 2 bis 5 Stunden liegt.

## Revendications

1. Poudre fluorescente à base d'aluminate revêtue de nanoparticules métalliques, ladite poudre fluorescente à base d'aluminate revêtue de nanoparticules métalliques ayant la formule chimique de (Y₁₋ₓTbₓ)3(Al_{1-y}Ga_{y})₅O₁₂@zM, dans lequel 0 < x ≤ 1,0, 0 ≤ y ≤ 1,0, @ désigne le revêtement, M est la nanoparticule métallique, z est le rapport molaire des nanoparticules métalliques à la poudre fluorescente à base d'aluminate et 0 < z ≤ 0,01.

2. Poudre fluorescente à base d'aluminate revêtue de nanoparticules métalliques selon la revendication 1, dans laquelle ladite nanoparticule métallique M est l'un de Ag, Au, Pt, Pd, Cu.

3. Poudre fluorescente à base d'aluminate revêtue de nanoparticules métalliques selon la revendication 1 ou 2, dans laquelle 0,20 ≤ x ≤ 0,60, 0,25 ≤ y ≤ 0,75, 1x10⁻⁴ ≤ z ≤ 5x10⁻³.

4. Procédé de production de poudre fluorescente à base d'aluminate revêtue de nanoparticules métalliques, comprenant :
(a) la production de colloïde de nanoparticules métalliques ;
(b) le traitement de surface de la nanoparticule métallique par ajout du colloïde de nanoparticules métalliques à la solution dans laquelle de la polyvinylpyrrolidone est dissoute ;
(c) l'utilisation d'une solution de Al(NO₃)₃, Tb(NO₃)₃, Ga(NO₃)₃ et Y(NO₃)₃ dans une fiole Erlenmeyer, l'agitation, le chauffage dans un bain-marie, l'ajout à la solution finale traitée dans l'étape (b) directement et l'agitation uniformément pour former une solution mélangée ;
(d) la formation d'un liquide mixte par dissolution d'acide citrique monohydraté dans de l'éthanol, l'ajout dudit liquide mixte à la solution mixte finale obtenue dans l'étape (c), l'ajustement de la valeur de pH à 3 à 5 avec de l'ammoniac, le scellement, le maintien d'une température constante, le séchage et l'obtention d'un précurseur ;
(e) la précalcination du précurseur obtenu dans l'étape (d), puis le refroidissement à température ambiante, la calcination dans une atmosphère réductrice après broyage, refroidissement, prélèvement et broyage pour obtenir ladite poudre fluorescente à base d'aluminate revêtue de nanoparticules métalliques.

5. Procédé de production selon la revendication 4, dans lequel, le procédé de production de colloïde de nanoparticules métalliques dans ladite étape (a), comprenant : la dissolution de composé métallique dans de l'éthanol ou de l'eau et la dilution puis, sous agitation, le mélange avec un ou plusieurs agents auxiliaires et un agent réducteur successivement, pour obtenir un colloïde de nanoparticules métalliques.

6. Procédé de production selon la revendication 5, dans lequel, ledit agent auxiliaire est au moins l'un de la polyvinylpyrrolidone, le citrate de sodium, le bromure de cétyltriméthylammonium, le dodécylsulfate de sodium, le dodécylsulfonate de sodium, ledit agent réducteur étant au moins l'un de l'hydrate d'hydrazine, l'acide ascorbique, le citrate de sodium, le borohydrure de sodium.

7. Procédé de production selon la revendication 4, dans lequel, dans ladite étape (c), la température du bain-marie est de 80 °C ; dans ladite étape (e), ladite atmosphère réductrice est un gaz quelconque choisi parmi un gaz mixte d'azote et d'hydrogène, de l'hydrogène pur, et du monoxyde de carbone.

8. Procédé de production selon la revendication 4, dans lequel, dans ladite étape (d), le rapport molaire dudit acide citrique monohydraté à l'ion métallique total est de 3:1, ladite température est maintenue constante pendant 3 à 6 h par agitation dans un bain-marie à 80 °C.

9. Procédé de production selon la revendication 4, dans lequel, dans ladite étape (d), ladite condition de séchage est un séchage dans un four de séchage à 60 °C pendant 12 heures, puis un séchage à 100 °C.

10. Procédé de production selon la revendication 4, dans lequel, dans ladite étape (f), la température de ladite précalcination est dans la plage de 600 à 1250 °C, la durée de précalcination est dans la plage de 2 à 6 heures, la température de ladite calcination est dans la plage de 900 à 1400 °C, la durée de calcination est dans la plage de 2 à 5 heures.
